Europäisches Patentamt

**European Patent Office**

**Office européen des brevets**

(19)

(11) Veröffentlichungsnummer: **0 215 812**
**B1**

(12)

# EUROPÄISCHE PATENTSCHRIFT

(45) Veröffentlichungstag der Patentschrift:
**31.05.89**

(21) Anmeldenummer: **86901043.9**

(22) Anmeldetag: **06.02.86**

(86) Internationale Anmeldenummer:
**PCT/DE 86/00042**

(87) Internationale Veröffentlichungsnummer:
**WO 86/04557 (14.08.86 Gazette 86/18)**

(51) Int. Cl.⁴: **B 63 B 1/08,** B 63 B 1/34,
B 63 B 1/16, B 63 B 1/40

(54) **BOOTSRUMPF.**

(30) Priorität: **06.02.85 US 698633**

(43) Veröffentlichungstag der Anmeldung:
**01.04.87 Patentblatt 87/14**

(45) Bekanntmachung des Hinweises auf die Patenterteilung:
**31.05.89 Patentblatt 89/22**

(84) Benannte Vertragsstaaten:
**AT BE CH DE FR GB IT LI NL SE**

(56) Entgegenhaltungen:
**FR-A-2 271 975**
**GB-A-1 447**
**GB-A-116 255**
**GB-A-1 034 370**
**GB-A-1 604 462**
**US-A-2 663 276**

(73) Patentinhaber: **GÜTTLER, Jo, Hansegartenstrasse 6,**
**D-7750 Konstanz (DE)**

(72) Erfinder: **GÜTTLER, Jo, Hansegartenstrasse 6,**
**D-7750 Konstanz (DE)**

LIBER, STOCKHOLM 1989

EP 0 215 812 B1

## Beschreibung

Die Erfindung betrifft einen Bootsrumpf mit zumindest einem in die Rumpfschale vor Rumpfende eingeformten Kanal.

Grundsätzlich fährt ein Boot mit einer bestimmten Antriebskraft umso schneller, je geringer der Widerstand des Bootsrumpfes im Wasser ist.

Bei einem Renn-Ruderboot erreicht man das bekanntlich durch einen schmalen, langen Rumpf mit einem langen schlank auslaufenden Heck.

Bei einem Renn-Motorboot erreicht man das mit einem kurzen Bootsrumpf und einem gerade abgeschnittenen Heck.

Alle Wasserfahrzeuge haben die Eigenart, daß die optimal günstigste Rumpfform ihre optimalen Eigenschaften nur bei einer ganz bestimmten Geschwindigkeit hat.

Die meisten Wasserfahrzeuge werden nach ihrer Rumpfform in drei Gruppen eingeteilt, nämlich in:
- Wasserfahrzeuge mit Verdrängerrumpf,
- Wasserfahrzeuge mit Halbgleiter-Rumpf und
- Wasserfahrzeuge mit Gleitrumpf.

Der Vorteil des Verdrängerrumpfes ist ein geringer Wasserwiderstand bei geringer Geschwindigkeit und eine hervorragende Seetüchtigkeit bei schwerer See, insbesondere bei Wellen von achtern. Ein großer Nachteil dieser Heckform ist jedoch, daß bei der sogenannten Rumpfgeschwindigkeit der Wasserwiderstand sehr stark zunimmt. Der durch die Heckwelle entstehende Sog hält das Boot fest, was zum Beispiel beim Ziehen des Bootes durch starke Schleppfahrzeuge so weit führen kann, daß das Boot unter die Wasseroberfläche gezogen wird.

Der Halbgleiter-Rumpf nach den heutigen stand der Technik ist in dieser Hinsicht günstiger, weil er eine starke Heckwelle durch das Abreißheck über der Wasserlinie zum Abreißen bringt. Dagegen weist er erhebliche Nachteile bei rauher See auf und da insbesondere bei Wellen von achtern, weil größere Wellen über das Boot hinweggehen.

Die Gleitform ist wiederum nur bei stark motorisierten oder ganz leichten Booten anwendbar, weil bei niederen Geschwindigkeiten das abgeschnittene Heck in das Wasser taucht und dabei einen sehr hohen Widerstand verursacht.

Aus der FR-A-2 271 975 ist ein Boot mit einem Gleit-Rumpf bekannt, welcher vom Bug bis zum Heck kammartige Anformungen aufweist. Diese kammartigen Anformungen kreuzen auch die Wasserlinie. Diese kammartigen Anformungen verhindern jedoch lediglich ein Ansteigen des Wassers entlang der Rumpfschale während der Gleitfahrt und damit eine Erhöhung der Fläche, welche unter der Rückhaltekraft des Wassers steht.

Ferner sind am Heck unterhalb der Wasserlinie Flügel vorgesehen. Damit wird gewährleistet, daß der Gleitrumpf bei langsamer Fahrt ähnliche Eigenschaften aufweist wie ein Verdrängerrumpf, während bei schnellerer Fahrt der Rumpf quasi auf die Wasserlinie aufgleitet und die Eigenschaft eines Gleitrumpfes besitzt.

Nachteilig bei dieser Bootsform hat sich erwiesen, daß Ein- bzw. Anformungen sich über die ganze Bootshülle hin erstrecken müssen. Ferner kann sie nur dazu dienen, einem Gleitrumpf bei langsamer Fahrt die Eigenschaften eines Verdrängerrumpfes zu vermitteln. Für einen Verdrängerrumpf sind weder die Anformungen noch die Flügel geeignet, aus ihm einen Gleitrumpf zu machen. Ferner haben die Flügel allein die Aufgabe, die Wellenbildung am Heck zu verringern und damit den Widerstand zu vermindern. Allerdings wird durch die Flügel die benetzte Oberfläche vergrößert und damit wieder die Wasserreibung erhöht.

Die Britische Patentschrift GB-A-1 447 A.D. 1909 beschreibt einen Halbgleiter-Bootsrumpf, der ähnlich wie die Schwimmkörper von Wasserflugzeugen im rechten Winkel zur Fahrtrichtung mit Stufen versehen ist. Das bedeutet bei geringer Fahrtgeschwindigkeit einen erheblich größeren Widerstand. Bei Steigerung der Geschwindigkeit sammelt sich Luft in den Stufenabschnitten, die dazu führt, daß die Benetzung des Wassers vermindert wird. Hierzu muß jedoch die Geschwindigkeit ganz erheblich erhöht werden.

In der GB-A-116 255 ist ein Verdränger-Rumpf beschrieben, bei dem am Heck zahlreiche Lüftungsklappen angebracht sind, durch die von einem Ventilator Luft in das Wasser geblasen wird.

Die so eingeblasene Luft steigt in Luftblasen an die Oberfläche, so daß hierdurch ein Widerstand des Bootes durch das Wasser nicht vermindert wird.

Die US-A-2 663 276 beschreibt wiederum ein Schiff mit am Heck angebrachten Luftzuführungsrohren mit Schlitzen. Ferner sind entsprechende Klappen unterhalb der Wasserlinie angeordnet, die zum einen zum Abbremsen des Schiffes benutzt werden, zum anderen können sie Öffnungen freigeben, durch welche Luft aus dem Luftzuführungsrohre der Wasserlinie austritt. Hierdurch soll in gewissem Umfang der Wasserwiderstand durch Erzielung eines Luftpolsters vermindert werden. Die dadurch erzielte Wirkung ist jedoch minimal.

Der Erfinder hat sich zum Ziel gesetzt, einen Bootsrumpf zu entwickeln, der im Stillstand und/oder auch während der Fahrt von einem Verdränger-Rumpf mit den bekannten Vorteilen hydrodynamisch in einen Gleit-Rumpf mit den bekannten Vorteilen kontinuierlich umgewandelt wird und somit die Rumpfform hydrodynamisch an die jeweilige Fahrtgeschwindigkeit angepaßt werden kann bzw. automatisch angepaßt wird.

Zur Lösung dieser Aufgabe führt, daß der Luftzuführungs-Kanal die Wasserlinie kreuzt und von flexiblen Streifen überdeckt ist, deren vordere Kanten am Bootsrumpf festliegen, während die hinteren Kanten zum Ablösen des abströmenden Wassers vom Bootsrumpf dienen können.

Damit wird bewirkt, daß die Heckwelle bereits über der Wasserlinie und je nach Geschwindigkeit mehr oder weniger weit nach unten und auch nach vorne vom Bootsrumpf abgelöst wird und so durch ihren Sog keinen Widerstand mehr erzeugen kann. Hierdurch wird ein Bootsrumpf geschaffen, der bei jeder Geschwindigkeit hydrodynamisch auf die optimale Form mit geringstem Widerstand eingestellt werden kann.

Die Einrichtungen zum Ablösen der Heckwelle kreuzen bevorzugt die Wasserlinie von vorne oben nach hinten unten, d. h. in einem spitzen Winkel. Hierdurch wird erreicht, daß auch bei tieferem Eintauchen des Hecks in das Wasser die Einrichtungen immer so liegen, daß die Abrißlinien über der Wasseroberfläche in Fahrtrichtung immer vor den Eintauchpunkten verlaufen. Andernfalls würden sich die Luftzuführungskanäle mit Wasser füllen, womit deren Wirkung ausgeschaltet würde.

Um eine möglichst stufenlose hydrodynamische Umwandlung des Verdränger-Rumpfes in einen Gleit-Rumpf zu erreichen, können anstatt einer Einrichtung mit einer Abrißlinie auch mehrere Einrichtungen am Rumpf hintereinander angeordnet sein, die ggfs. auch mit unterschiedlichen Winkeln zueinander und zur Wasseroberfläche (Wasserlinie) verlaufen.

Eine Ausführungsform sieht vor, daß der Kanal mit flexiblen Streifen überdeckt ist, deren Stellungen durch mechanische, pneumatische oder hydraulische Betätigungselemente verändert werden können. Durch die hier ausströmende Luft entsteht zwischen Rumpfschale und Wasser ein Luftpolster, wodurch sich keinerlei Sog mehr bilden kann und damit eine sichere Trennung der Heckwelle vom Rumpf gewährleistet ist.

Bei einer weiteren Möglichkeit ist der Kanal von federartigen Streifen unter Freilassung eines Schlitzes überdeckt.

Die Streifen sind in der Ebene der Rumpfschale angeordnet, so daß sie keine geschwindigkeitsbeeinträchtigende Ausformung bei niederen Geschwindigkeiten darstellt. Diese federartigen Streifen können in einer weiteren Verbesserung ausstellbar ausgebildet sein. Hierzu sind in dem Luftzuführungskanal wiederum Betätigungselemente vorgesehen.

Bei der vorliegenden Erfindung können somit die Vorteile des Verdränger-Rumpfes bei niedrigen Geschwindigkeiten und rauher See voll ausgenutzt werden. Bei steigender Geschwindigkeit kann durch die beschriebenen Einrichtungen die Rumpflänge hydrodynamisch verlängert werden. Die Geschwindigkeits-Barriere der sogenannten Rumpfgeschwindigkeit (2,43 x √ Länge Wasserlinie) gibt es damit nicht mehr. Damit ist es möglich, beispielsweise eine Yacht in der gleichen Art wie eine Jolle zum Gleiten oder Surfen zu bringen, weil das Heck nicht nach unten gezogen wird. Aus dem Verdränger-Rumpf wird ein Gleit-Rumpf. Dies geschieht durch ein gewolltes Ableiten der Heckwellen von der Rumpfschale vor dem Rumpfende. Dabei wird die Heckwelle von der Wasserlinie aus vom Rumpf abgerissen und abgeleitet.

Mit einem ähnlichen Problem befaßt sich auch die GB-PS-2 098 136. Dort werden zur Änderung der Rumpfform aus dem Boden des Boots Teile herausgefahren, so daß das Boot bei erhöhter Geschwindigkeit auf die Wasseroberfläche aufgleitet. Hierbei kommt es jedoch nicht zu einem Abreißen der Heckwelle.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

Fig. 1     eine schematische Darstellung eines Bootsrumpfes;

Fig. 2     einen teilweise dargestellten Horizontalschnitt durch das Heckteil des Bootsrumpfes entlang Linie II-II in Fig. 1;

Fig. 3     weitere Ausführungsformen eines Heckteils;

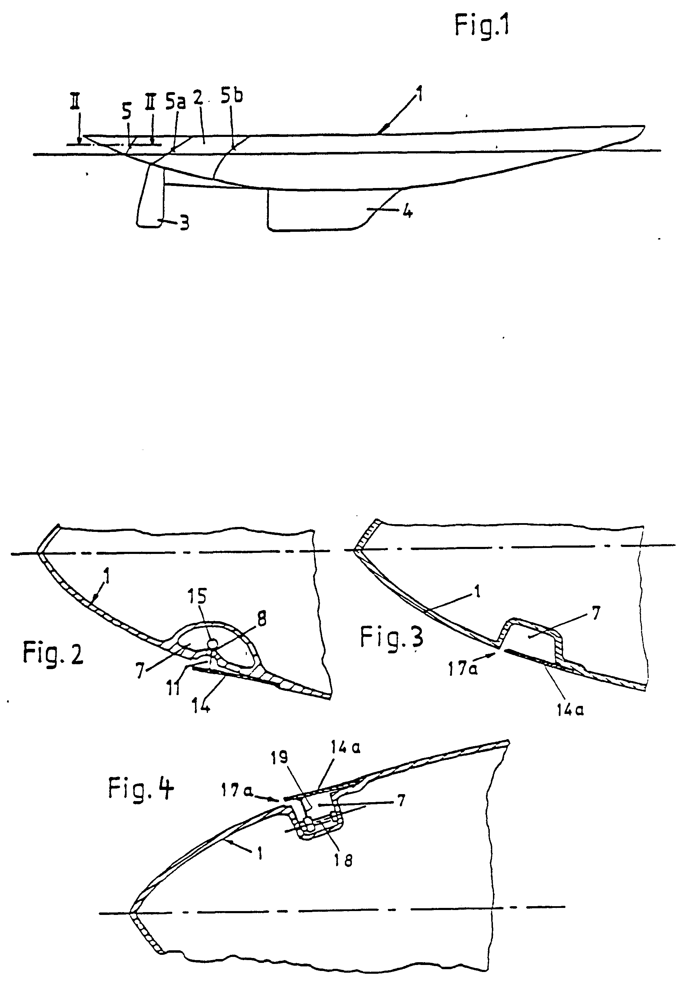

und 4     dargestellt entsprechend Fig. 2.

Figur 1 zeigt eine Rumpfschale 1 mit einem Heckteil 2, einem Ruder 3 sowie einem Kiel 4. Die Linien 5 veranschaulichen die Lage von aktivierbaren Einrichtungen zum Abreißen der Heckwelle.

Diese Einrichtungen sind in verschiedenen Ausführungsformen in den Figuren 2 bis 4 näher dargestellt.

Bei der Ausführungsform nach Figur 2 wird die Abreißkante von flexiblen Streifen 14 gebildet, welche in Fahrtrichtung in der Rumpfschale 1 versenkt befestigt sind, entgegen der Fahrtrichtung jedoch beweglich angeordnet sind, so daß sie in der Rumpfschale versenkt oder auch von der Rumpfschale abstehen können und dabei eine Rille 11 bzw. einen Luftzuführungs-Kanal 7 überdecken. Diese Streifen 14 können aber auch beispielsweise unter einer nach innen gerichteten Vorspannung stehen. Halteelemente 15 können als Zugelemente ausgebildet sein, wenn die Streifen 14 eine nach außen gerichtete Spannung aufweisen. Über Ziehen an den Zugelementen kann dann die Lage der Streifen im Verhältnis zur Rumpfschale gesteuert werden.

Werden die Streifen 14 ganz eingezogen, bilden sie schlußendlich einen Teil der Rumpfschale 1. Auf diese Weise kann die Lage der als Abreißkante wirkenden Streifen 14 sowohl während der Fahrt als auch im Stillstand je nach Wunsch eingestellt werden. Dies kann selbsttätig oder gesteuert, beispielsweise je nach Geschwindigkeit des Bootes, erfolgen.

Die Figuren 3 und 4 stellen besonders bevorzugte Ausführungsformen der Erfindung dar. Gemäß Figur 3 ist der Luftzuführungskanal 7 von Streifen 14a abgedeckt, welche in der Ebene der Rumpfschale 1 angeordnet sind. Die Streifen 14a bilden mit der Rumpfschale 1 einen Schlitz 17a, aus dem Luft austreten kann. Eine ähnliche Gestaltung zeigt auch Figur 4, allerdings sind dort die Streifen 14a bewegbar ausgebildet. Hierzu ist in dem Luftzuführungskanal 7 ein Antrieb 18 vorgesehen, der hydraulisch, pneumatisch oder mechanisch eine Antriebsstange 19 antreibt, über welche die Streifen 14a aus der Ebene der Rumpfschale 1 herausgedrückt werden können.

Die Einrichtung zum Abreißen der Heckwelle kann sowohl bei Stillstand wie auch bei Fahrt des Bootes verstellt werden.

**Patentansprüche**

1. Bootsrumpf mit zumindest einem in die Rumpfschale vor Rumpfende eingeformten Luftzuführungs-Kanal,
dadurch gekennzeichnet,
daß der Luftzuführungs-Kanal (7) die Wasserlinie kreuzt und von flexiblen Streifen (14) überdeckt wird, deren vordere Kanten am Bootsrumpf festliegen, während ihre hinteren Kanten zum Ablösen des abströmenden Wassers vom Bootsrumpf dienen können.

2. Bootsrumpf nach Anspruch 1, dadurch gekennzeichnet, daß die Stellung der Streifen (14) zur Rumpfschale (1) selbsttätig einstellbar eingerichtet ist.

3. Bootsrumpf nach Anspruch 1, dadurch gekennzeichnet, daß der Luftzuführungskanal (7) von federartigen Streifen (14a) unter Freilassung eines Schlitzes (17a) überdeckt ist, wobei die Streifen (14a) in der Ebene der Rumpfschale (1) angeordnet sind.

4. Bootsrumpf nach Anspruch 3, dadurch gekennzeichnet, daß in dem Luftzuführungskanal (7) ein Antrieb (18) für eine Antriebsstange (19) od. dgl. vorgesehen ist, welcher die Streifen (14a) aus der Ebene des Rumpfes (1) herausführt.

5. Bootsrumpf nach wenigstens einem der Ansprüche 1 bis 4, dadurch gekennzeichnet, daß am Rumpf (1) mehrere aktivierbare Einrichtungen (7, 14) hintereinander liegend angeordnet sind.

6. Bootsrumpf nach Anspruch 5, dadurch gekennzeichnet, daß die aktivierbaren Einrichtungen (7, 14) in unterschiedlichen Winkeln zueinander und zu der Wasserlinie verlaufen können.

**Revendications**

1. Coque de bateau avec au moins un canal d'alimentation en air formé dans la surface de la coque, avant l'extrémité de la coque, caractérisée en ce que le canal d'alimentation en air (7) croise la ligne de flottaison et est recouvert par des bandes (14) flexibles dont les arêtes avant sont fixées sur la coque de bateau, tandis que leurs arêtes arrière peuvent servir a décoller de la coque du bateau l'eau qui s'ecoule.

2. Coque de bateau selon la revendication 1, caractérisée en ce que la position des bandes (14) par rapport à la surface de la coque (1) est orientee d'une manière réglable automatiquement.

3. Coque de bateau selon la revendication 1, caractérisée en ce que le canal d'alimentation d'air (7) est recouvert de bandes (14a) en forme de ressort, laissant subsister une fente (17a), les bandes (14a) étant disposées dans le plan de la surface de coque (1).

4. Coque de bateau selon la revendication 3, caractérisée en ce qu'un entraînement (18) pour une tige d'entraînement (19), ou similaire, est prévu dans le canal d'alimentation d'air (7), entraînement faisant sortir les bandes (14a) du plan de la coque (1).

5. Coque de bateau selon au moins l'une des revendications 1 à 4, caractérisée en ce que plusieurs dispositifs (7, 14) activables sont disposés les uns derrière les autres sur la coque (1).

6. Coque de bateau selon la revendication 5, caractérisée en ce que les dispositifs activables (7, 14) peuvent se développer sous des angles différents les uns par rapport aux autres et par rapport à la ligne de flottaison.

**Claims**

1. A boat hull with at least one air supply duct which is formed into the hull shell in front of the end of the hull, characterised in that the air supply duct (7) intersects the water-line and is covered by flexible strips (14), the front edges of which are fixed on the boat hull while their rear edges can serve for releasing the issuing water from the boat hull.

2. A boat hull according to Claim 1, characterised in that the position of the strips (14) relative to the hull shell (1) is controlled in an automatically adjustable manner.

3. A boat hull according to Claim 1, characterised in that the air supply duct (7) is covered by resilient strips (14a) while leaving clear a slot (17a), the strips (14a) being arranged in the plane of the hull shell (1).

4. A boat hull according to Claim 3, characterised in that, in the air supply duct (7) there is provided a driving means (18) for a driving rod (19) or the like which drives the strips (14a) from the plane of the hull (1).

5. A boat hull according to at least one of Claims 1 to 4, characterised in that several actuatable devices (7, 14) are arranged in succession on the hull (1)

6. A boat hull according to Claim 5, characterised in that the actuatable devices (7, 14) can run at differing angles to one another and to the water-line.

Fig.1

Fig. 2

Fig.3

Fig. 4